# EUROPÄISCHE PATENTSCHRIFT

(11) **EP 4 740 260 B1**
(45) Veröffentlichungstag und Bekanntmachung des Hinweises auf die Patenterteilung: **28.10.2026**
(21) Anmeldenummer: 25722882.5
(22) Anmeldetag: 29.04.2025
(51) Int. Cl.: H01M 10/6555, H01M 10/658

(54) **BATTERIEANORDNUNG MIT VERBESSERTER THERMISCHER ISOLIERUNG**
BATTERY ARRANGEMENT WITH IMPROVED THERMAL INSULATION
AGENCEMENT DE BATTERIE À ISOLATION THERMIQUE AMÉLIORÉE

(30) Priorität: 02.05.2024 DE 102024112303; 02.05.2024 DE 202024102240 U
(43) Veröffentlichungstag der Anmeldung: 13.05.2026
(73) Patentinhaber: NIES, Klaus-Dieter, 57399 Kirchhundem (DE)
(72) Erfinder: NIES, Klaus-Dieter, 57399 Kirchhundem (DE)
(74) Vertreter: Pelster Behrends Patentanwälte PartG mbB
(86) Internationale Anmeldenummer: PCT/EP2025/061692
(87) Internationale Veröffentlichungsnummer: WO 2025/228970

(56) Entgegenhaltungen:
- EP-A1- 4 280 348
- CN-A- 116 710 276
- CN-A- 117 254 170
- DE-A1- 102022 118 738
- DE-U1- 202022 002 887
- US-A1- 2019 140 237

## Beschreibung

Die Erfindung betrifft eine Batterieanordnung, insbesondere für den Einsatz in Elektrofahrzeugen, ein Verfahren zur Herstellung solcher Batterieanordnungen und ein Fahrzeug umfassend eine entsprechende Batterieanordnung. Offenbart wird zudem die Verwendung eines spezifischen flächigen Trennelements zur thermischen Isolierung von zwei oder mehr Batterieeinheiten in einer Batterieanordnung.

Im Zuge eines steigenden Bewusstseins für einen nachhaltigeren Umgang mit fossilen Ressourcen und einer Vermeidung von Treibhausgasemissionen rückt in den letzten Jahren die Verbesserung von Elektrofahrzeugen und die Entwicklung neuer Konzepte der Elektromobilität zunehmend in dem Fokus vieler Industriezweige.

Ein wesentlicher Bestandteil von Elektrofahrzeugen, der in vielen Fällen maßgeblich für die mit dem Fahrzeug erreichbaren Distanzen verantwortlich ist, ist das zur Speicherung der elektrischen Energie genutzte Batteriesystem, auf welches entsprechend auch viel Forschungs- und Entwicklungsaufwand gerichtet wird. Moderne Batterieanordnungen für Elektrofahrzeuge bestehen zumeist aus einer Vielzahl von elektrisch miteinander verbundene Batterieeinheiten, beispielsweise in der Form von sogenannten Pouch-Zellen oder sogenannten prismatischen Zellen.

Diese Batterieeinheiten umfassen in ihrem Inneren die Bestandteile der jeweiligen elektrochemischen Zellen, die der elektrochemischen Speicherung von Energie dienen.

Die einzelnen Batterieeinheiten, welche beispielsweise als Lithium-Ionen-Batterien ausgeführt sein können, stellen dabei chemisch komplexe und vergleichsweise störungsanfällige Systeme dar, in denen bei der Zyklisierung zumindest teilweise exotherme Reaktionen ablaufen. Solche Batterieeinheiten sind, insbesondere da sie in vielen Fällen brennbare Substanzen umfassen, insbesondere Elektrolyte, und im Betrieb hohe Temperaturen auftreten können, anfällig für Fehlfunktionen. Infolgedessen kann es in einer Batterieeinheit im schlechtesten Fall zu einem sogenannten thermischen Durchgehen kommen. Im Zuge eines solchen thermischen Durchgehens kommt es neben einem möglichen Druckaufbau in der Batterieeinheit in den meisten Fällen insbesondere auch zu einer starken Temperatursteigerung und ggf. sogar zu einer Flammenbildung.

Das thermische Durchgehen einer Batterieeinheit kann dabei potentiell eine Kettenreaktion auslösen, bei der die Temperatursteigerung einer defekten Batterieeinheit das fragile Gleichgewicht der benachbarten Batterieeinheiten stört und auch in diesen ein thermisches Durchgehen auslöst. Aus diesem Grund werden Batterieeinheiten in entsprechenden Batterieanordnungen in vielen Fällen durch Trennelemente voneinander separiert, die insbesondere eine möglichst gute thermische Isolation zwischen den Batterieeinheiten gewährleisten müssen, um im Fall der Fälle eine Kettenreaktion des thermischen Durchgehens bestmöglich zu verhindern oder wenigstens zu verlangsamen.

Da es im Zuge des thermischen Durchgehens jedoch auch zu einer Flammenbildung kommen kann, müssen die Trennelemente in den meisten Fällen zudem feuerfest sein, um im Störungsfall nicht selbst als Brandmaterial zu wirken und die Kettenreaktion weiter voranzutreiben. Entsprechend sollen die Trennelemente auch eine brandtechnische Abschottung ermöglichen.

Stand der Technik sowie Informationen zum technologischen Hintergrund der Erfindung sind beispielsweise in der CN 117 254 170 A, der US 2019/140237 A1, der CN 116 710 276 A, der DE 10 2022 118738 A1, der DE 20 2022 002887 U1 und der EP 4 280 348 A1 offenbart.

Die jeweiligen Anforderungen an die eingesetzten Trennelemente variieren dabei mit der Konstruktionsweise der Batteriezellen.

Für Pouch-Zellen besteht eine Herausforderung darin, dass diese auch im regulären Betrieb Volumenänderungen erfahren, die durch die zumeist flexible Ummantelung der Batterieeinheiten an die Umgebung weitergegeben werden. Eine solche Volumenänderung durchlaufen viele der heutzutage kommerziell erhältlichen Batterieeinheiten in Pouch-Zellen-Konstruktion insbesondere beim Laden und Entladen der Batterieeinheiten, also im Zuge eines Vorganges, der über die Lebensdauer einer Batterieanordnung sehr häufig und, insbesondere beim Laden, auf einer vergleichsweise kurzen Zeitskala erfolgt. Dieser Umstand stellt entsprechend besondere Anforderungen an die Deformierbarkeit der Trennelemente bzw. deren Fähigkeit zur reversiblen Volumenänderung.

Für prismatische Zellen ist die Volumenänderung der Batterieeinheiten wegen der Zellgehäuse zumeist kein kritisches Kriterium, welches bei der Konzeption von Trennelementen berücksichtigt werden muss. Allerdings sind prismatische Zellen häufig schwerer zu kühlen als Pouch-Zellen. Gleichzeitig nimmt die Einhausung der prismatischen Zellen bereits einiges an Bauraum ein und ist mit einem erhöhten Eigengewicht verbunden, was sich negativ auf die Energiedichte der Batterieeinheit auswirken kann und darüber hinaus jedoch auch mit höheren Fertigungskosten verbunden sein kann. Entsprechend werden an die Trennelemente für prismatische Zellen vor allem dahingehend Anforderungen gestellt, dass diese auf möglichst kleinem Bauraum möglichst gute thermische Isolationseigenschaften aufweisen und auch bei geringer Dicke und niedrigem Eigengewicht eine zuverlässig brandtechnische Abschottung erlauben, wobei es wünschenswert ist, dass die Kosten für die Herstellung der Trennelemente so niedrig wie möglich gehalten werden können, um die Gesamtkosten nicht allzu stark weiter zu erhöhen.

Nach Einschätzung des Erfinders lösen die im Stand der Technik verfügbaren Trennelemente für prismatische Zellen den bestehenden Zielkonflikt aus i) einer guten thermischen Isolierung und einer ausreichenden brandtechnischen Abschottung, ii) eines niedrigen Eigengewichts und eines geringen Platzbedarfs sowie iii) einer einfachen, schnellen und kosteneffizienten Herstellung nicht zufriedenstellend.

Darüber hinaus werden für viele der aus dem Stand der Technik bekannten Trennelemente zwar bei vergleichsweise niedrigen Temperaturen ansprechende Isolationswirkungen gemessen, jedoch wird zuweilen eine ausgeprägte nachteilige Abnahme der Isolationswirkung bei höheren Temperaturen beobachtet, also eben bei jenen Temperaturen, welche beim thermischen Durchgehen auftreten können.

Es war die Aufgabe der vorliegenden Erfindung, die Nachteile des Standes der Technik zu beheben oder zumindest abzuschwächen.

Insbesondere war es eine Aufgabe der vorliegenden Erfindung, eine Batterieanordnung anzugeben, in der die Batterieeinheiten durch ein Trennelement möglichst gut vor einem Übergreifen des thermischen Durchgehens geschützt sind.

Dabei war es eine Aufgabe der vorliegenden Erfindung, eine Batterieanordnung anzugeben, in der die Batterieeinheiten durch ein Trennelement möglichst gut thermisch voneinander isoliert werden und durch eine exzellente brandtechnische Abschottung vor Flammenbildung der umliegenden Batterieeinheiten geschützt sind.

Insoweit war es eine wünschenswerte Maßgabe der vorliegenden Erfindung, dass das eingesetzte Trennelement die vorteilhaften Schutzwirkungen schon bei geringen Dicken und niedrigen Eigengewichten realisieren kann, um insoweit Konstruktionen für Batterieanordnung mit vorteilhaftem Bauraumbedarf und niedrigem Gewicht realisieren lassen.

Grundsätzlich war es eine wichtige Aufgabe der vorliegenden Erfindung, dass die anzugebende Batterieanordnung und das eingesetzte Trennelement besonders zeit- und kosteneffizient herstellbar sein sollte.

Es war eine weitere Aufgabe der vorliegenden Erfindung, ein Fahrzeug anzugeben, welches die anzugebende Batterieanordnung umfasst.

Abschließend war es eine sekundäre Aufgabe der vorliegenden Erfindung, eine Verwendung zur thermischen Isolierung von zwei oder mehr Batterieeinheiten in einer Batterieanordnung anzugeben.

Der Erfinder der vorliegenden Erfindung hat gefunden, dass die vorstehend beschriebenen Aufgaben überraschenderweise gelöst werden können, wenn in einer Batterieanordnung mit zwei oder mehr elektrisch miteinander verbundene Batterieeinheiten ein spezifisches mehrlagiges flächiges Hybrid-Trennelement vorgesehen wird, welches als Hybridmaterial ausgeführt wird, bei dem ein Kernelement mit einer flächigen Kernschicht, welche auf amorphem Siliciumdioxid basiert, mit einem Kunststoffmantel ummantelt wird, wie es in den Ansprüchen definiert ist. Hierbei werden besonders vorteilhafte Ergebnisse erzielt, wenn das Innere des Kunststoffmantels ein Unterdruck angelegt wird.

Überraschenderweise ermöglicht es der Einsatz dieser flächigen Trennelemente in Batterieanordnungen den Zielkonflikt aus einer guten thermischen Isolierung und einer ausreichenden brandtechnischen Abschottung auf der einen Seite und eines niedrigen Eigengewichts und eines geringen Platzbedarfs auf der anderen Seite in besonders vorteilhafter Weise. Besonders vorteilhaft ist dabei die Qualität der Lösung des vorstehenden Zielkonflikts relativ zu den vorteilhaft niedrigen Herstellungskosten, der hohen Verfügbarkeit der benötigten Materialien und der Zeiteffizienz, mit der entsprechende flächige Trennelemente hergestellt werden können. Insbesondere lassen sich die benötigten Kernschichten in zeit- und kosteneffizienter Weise durch Pressverfahren erhalten, entweder durch Einzelfertigung oder durch Ausformen eines größeren Presslings mit anschließender Vereinzelung der gewünschten Kernschichten. Auch die benötigte Ummantelung kann in effizienter Weise hergestellt werden, wobei in vorteilhafter Weise einfache Vorrichtungen zur Kunststofflaminierung verwendet werden können, um die gewünschte Ummantelung zu erreichen.

Die vorstehend genannten Aufgaben werden entsprechend durch den Gegenstand der Erfindung gelöst, wie er in den Ansprüchen definiert ist.

Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Fahrzeuge, Verfahren und Verwendungen ergeben sich aus den Merkmalen bevorzugter Batterieanordnungen.

Die Erfindung betrifft eine Batterieanordnung, insbesondere für den Einsatz in Elektrofahrzeugen, umfassend zwei oder mehr Batterieeinheiten,

wobei wenigstens zwischen zwei benachbarten Batterieeinheiten ein flächiges Trennelement angeordnet ist, welches die Batterieeinheiten zumindest abschnittsweise voneinander separiert, wobei das flächige Trennelement umfasst:
i) einen Elementkern, umfassend eine erste Kernschicht,
ii) einen den Elementkern ummantelnden Kunststoffmantel, umfassend ein Kunststoffmaterial,
dadurch gekennzeichnet, dass das poröse, amorphe Siliciumdioxid pyrogenes Siliciumdioxid ist und dass die erste Kernschicht (18) zu einem Massenanteil von 70 % oder mehr aus porösem, amorphen Siliciumdioxid besteht, bezogen auf die Masse der Kernschicht (18).

Batterieanordnung an sich sind dem Fachmann im Bereich der Technik grundsätzlich umfassend bekannt. Die erfindungsgemäße Batterieanordnung ist insbesondere für den Einsatz in Elektrofahrzeugen bzw. deren Batteriesystemen geeignet.

Die großen Vorteile erfindungsgemäßer Batterieanordnungen ergeben sich insbesondere aus der spezifischen Ausgestaltung des Trennelements. Entsprechend sind erfindungsgemäße Batterieanordnung hinsichtlich der Zellchemie in den Batterieeinheiten prinzipiell nicht beschränkt, wobei der Einsatz von Lithium-Ionen-Batterien wegen deren hoher industriellen Relevanz bevorzugt ist.

Um einem Elektrofahrzeug die notwendige Energie bereitstellen zu können, sind die Batterieeinheiten in entsprechenden Batterieanordnungen regelmäßig elektrisch miteinander verbunden wobei das Laden und Entladen des resultierenden Zellenstapels häufig durch eine Batteriekontrolleinheit gesteuert wird. Typisch ist beispielsweise eine erfindungsgemäße Batterieanordnung, wobei die Batterieeinheiten parallel und/oder seriell miteinander verschaltet sind.

Typisch ist auch eine erfindungsgemäße Batterieanordnung, wobei die Batterieanordnung in einem Gehäuse angeordnet ist und/oder wobei die Batterieanordnung mit einer Schutzummantelung umgeben ist.

In Übereinstimmung mit dem fachmännischen Verständnis kann es sich bei den Batterieeinheiten der erfindungsgemäßen Batterieanordnung um einzelne Batteriezellen handeln, die jeweils durch Trennelemente separiert sind, oder um Pakete aus mehreren individuellen Batteriezellen, die untereinander entweder nicht oder lediglich durch alternative Trennelemente, beispielsweise aus Silikonschaum, getrennt sind. Insoweit erachtet es der Erfinder mit Blick auf die Sicherheit der resultierenden Batterieanordnung jedoch für besonders vorteilhaft, wenn jeweils einzelne Batteriezellen oder lediglich Paare von Batteriezellen mit entsprechenden Trennelementen separiert werden. Beispielhaft ist somit eine erfindungsgemäße Batterieanordnung, wobei die Batterieeinheiten eine Batteriezelle oder zwei oder mehr elektrisch miteinander verbundene Batteriezellen, bevorzugt eine Batteriezelle, umfassen.

In der Praxis eignen sich die spezifischen Trennelemente der vorliegenden Erfindung insbesondere, um damit prismatische Zellen voneinander zu separieren. Bevorzugt ist entsprechend eine erfindungsgemäße Batterieanordnung, wobei die Batterieeinheiten prismatische Zellen sind oder prismatische Zellen umfassen, bevorzugt prismatische Zellen sind. Allerdings hat der Erfinder gefunden, dass sich die erfindungsgemäß einzusetzenden Trennelemente auch ausgezeichnet für den Einsatz mit Pouch-Zellen eignen, wenn in den Trennelementen eine mehrlagige Kernschicht eingesetzt wird, insbesondere unter Aufnahme eines Strukturmaterials aus thermoplastischem Elastomer, wie es nachfolgend offenbart ist.

In der Praxis weisen entsprechende Batterieanordnungen zumeist eine Vielzahl an Batterieeinheiten und eine komplementäre Zahl von Trennelementen auf. Typisch ist deshalb auch eine erfindungsgemäße Batterieanordnung, wobei die Batterieanordnung vier oder mehr, bevorzugt sechs oder mehr, elektrisch miteinander verbundene Batterieeinheiten umfasst, und/oder wobei die Batterieanordnung drei oder mehr, bevorzugt fünf oder mehr, flächige Trennelemente umfasst.

Wesentlicher Bestandteil der flächigen Hybridmaterialien, welche im Rahmen der vorliegenden Erfindung als Trennelemente eingesetzt werden, ist die Kernschicht. Diese Kernschicht umfasst poröses amorphen Siliciumdioxid. In den Experimenten des Erfinders hat sich insbesondere das pyrogenene Siliciumdioxid als besonders geeignet erwiesen. Erfindungsgemäß ist entsprechend eine erfindungsgemäße Batterieanordnung, wobei das poröse, amorphe Siliciumdioxid pyrogenes Siliciumdioxid ist. Bevorzugt ist eine erfindungsgemäße Batterieanordnung, wobei das poröse, amorphe Siliciumdioxid ausgewählt ist aus der Gruppe bestehend aus partikulärem Siliciumdioxid.

Zur Optimierung der Isolationswirkung schlägt der Erfinder vor, insbesondere besonders poröses Siliciumdioxid einzusetzen, welches über eine besonders hohe Stickstoff-Oberfläche verfügt, was sich insbesondere im Zusammenspiel mit einem verringerten Druck im Inneren des flächigen Trennelements als besonders leistungsfähig erwiesen hat. Bevorzugt ist folglich eine erfindungsgemäße Batterieanordnung, wobei das poröse, amorphe Siliciumdioxid eine Stickstoff-Oberfläche (BET) gemäß DIN ISO 9277:2014-01 im Bereich von 50 bis 1200 m²/g, bevorzugt im Bereich von 100 bis 800 m²/g, besonders bevorzugt im Bereich von 140 bis 600 m²/g, aufweisen.

Nach Einschätzung des Erfinders können in der Kernschicht neben dem porösen, amorphen Siliciumdioxid prinzipiell auch kleinere Mengen an anderen Materialien eingesetzt werden, um beispielsweise die physikalisch-chemischen oder mechanischen Eigenschaften der Kernschichten an die jeweiligen Anwendungserfordernisse anzupassen. Allerdings ist es mit Blick auf eine kosteneffiziente Herstellung bei gleichzeitig ausgezeichneter Isolierwirkung nach Erkenntnis des Erfinders bevorzugt, die Kernschicht möglichst weitgehend aus dem porösen, amorphen Siliciumdioxid auszubilden. Insbesondere ist es für die Erzielung einer vorteilhaften Isolationswirkung und zum Erreichen vorteilhafter brandtechnischer Eigenschaften günstig, den Anteil an einem etwaigen Bindemittel möglichst gering zu halten. Bevorzugt ist demgemäß eine erfindungsgemäße Batterieanordnung, wobei die erste Kernschicht zu einem Massenanteil von 70 % oder mehr, bevorzugt 80 % oder mehr, besonders bevorzugt 90 % oder mehr, ganz besonders bevorzugt zu 95 % oder mehr, aus porösem, amorphen Siliciumdioxid besteht. Bevorzugt ist zusätzlich oder alternativ auch eine erfindungsgemäße Batterieanordnung, wobei die erste Kernschicht einen Massenanteil von weniger als 5 %, bevorzugt weniger als 2 %, besonders bevorzugt weniger als 1 %, ganz besonders bevorzugt weniger als 0,5 %, Bindemittel umfasst, insbesondere gar kein Bindemittel, bezogen auf die Masse der Kernschicht.

Um die Schutzwirkung gegen Hitzestrahlung weiter zu optimieren, schlägt der Erfinder vor, in einer Lage des Elementkerns, bevorzugt in der ersten Kernschicht ein Trübungsmittel vorzusehen, mit welchem die optischen Absorptionseigenschaften optimiert werden können.

Der Erfinder hat besonders günstige Ergebnisse mit Kernschichten erreich, deren Dichte spezifisch eingestellt wurde. Bevorzugt ist nämlich eine erfindungsgemäße Batterieanordnung, wobei die erste Kernschicht eine mittlere Dichte im Bereich von 200 bis 450 kg/m³, bevorzugt im Bereich von 250 bis 425 kg/m³, besonders bevorzugt im Bereich von 300 bis 400 kg/m³, aufweist.

Die erste Kernschicht leistet in den erfindungsgemäß einzusetzenden Trennelementen einen maßgeblichen Beitrag zu der Gesamtisolationswirkung, wobei die erste Kernschicht in vorteilhafter Weise dank des eingesetzten anorganischen Materials nicht nur mit vorteilhaften brandtechnischen Eigenschaften ausgerüstet werden kann, sondern auch vorteilhafte Wärmeleitfähigkeiten aufweist. Bevorzugt ist hierbei eine erfindungsgemäße Batterieanordnung, wobei das flächige Trennelement bei 23 °C eine mittlere Gesamtwärmeleitfähigkeit durch die erste Kernschicht hindurch von 0,050 W/mK oder weniger, bevorzugt von 0,030 W/mK oder weniger, besonders bevorzugt von 0,022 W/mK oder weniger, aufweist, wobei die Gesamtwärmeleitfähigkeit gemäß DIN EN ISO 22007 aus 2018 bestimmt wird. Bevorzugt ist zusätzlich oder alternativ auch eine erfindungsgemäße Batterieanordnung, wobei das flächige Trennelement bei 250 °C eine mittlere Gesamtwärmeleitfähigkeit durch die erste Kernschicht hindurch von 0,060 W/mK oder weniger, bevorzugt von 0,035 W/mK oder weniger, besonders bevorzugt von 0,026 W/mK oder weniger, aufweist, wobei die Gesamtwärmeleitfähigkeit gemäß DIN EN ISO 22007 aus 2018 bestimmt wird.

Entsprechende Kernschichten lassen sich in vorteilhafter Weise durch Verpressen von partikulärem, porösen, amorphen Siliciumdioxid erhalten, wobei in vorteilhafter Weise auf den Einsatz eines Bindemittels verzichtet werden kann, was mit Blick auf die Haltbarkeit und Stabilität insbesondere durch die erfindungsgemäß vorgesehene Ummantelung mit dem Kunststoffmaterial befördert wird. Bevorzugt ist somit eine erfindungsgemäße Batterieanordnung, wobei die erste Kernschicht hergestellt oder herstellbar ist durch Verpressen von partikulärem, porösen, amorphen Siliciumdioxid, bevorzugt ohne Einsatz eines Bindemittels.

Die der Elementkern und damit die erste Kernschicht werden erfindungsgemäß mit einem Kunststoffmantel ummantelt. Eine solche Ummantelung kann dabei beispielsweise mit einem aushärtbaren Kunststoff erfolgen, so dass eine duroplastische Ummantelung erhalten wird. Besonders bevorzugt ist es mit Blick auf die Herstellung der Trennelemente jedoch, thermoplastische Materialien einzusetzen. Bevorzugt ist vor diesem Hintergrund eine erfindungsgemäße Batterieanordnung, wobei das Kunststoffmaterial einen oder mehrere thermoplastische Kunststoffe und/oder duroplastische Kunststoffe, bevorzugt thermoplastische Kunststoffe, umfasst. Besonders bevorzugt ist insoweit eine erfindungsgemäße Batterieanordnung, wobei das Kunststoffmaterial einen oder mehrere Kunststoffe umfasst, die ausgewählt sind aus der Gruppe bestehend aus Silikonen, Polyolefinen, insbesondere Polyethylen, Polyamid, Polyestern, insbesondere Polyethylenterephthalat, Polyvinylchlorid, Poly(meth)acrylaten, insbesondere Polymethylmethacrylat und Melaminharzen.

Auch wenn es zumindest theoretisch denkbar wäre, das Kernelement nur teilweise mit dem Kunststoffmaterial zu ummanteln, ist es für nahezu alle Fälle bevorzugt, denn Kunststoffmantel möglich weitgehend geschlossen auszuführen. Insbesondere ist es bevorzugt, das Kernelement weitgehend formschlüssig mit dem Kunststoffmantel zu umgeben, wie es beispielsweise mit einer LaminierVorrichtung erfolgen kann. Bevorzugt ist für die weit überwiegende Zahl der Anwendungsfälle somit eine erfindungsgemäße Batterieanordnung, wobei der Kunststoffmantel den Elementkern vollständig umgibt, bevorzugt im Wesentlichen formschlüssig. Bevorzugt ist zusätzlich oder alternativ eine erfindungsgemäße Batterieanordnung, wobei der Kunststoffmantel einen Innenraum ausbildet, wobei der Elementkern im Innenraum angeordnet ist, bevorzugt im Wesentlichen formschlüssig.

Ausgehend von der vorstehend beschriebenen Grundanordnung, mit der sich in vielen Fällen bereits ausgezeichnete Ergebnisse erzielen lassen und welche vor allem besonders zeit- und kosteneffizient herstellbar sind, hat der Erfinder zwei besonders bevorzugte Weiterentwicklungen identifiziert, mit denen sich insbesondere die Leistungsfähigkeit bei starker thermischer Belastung weiter verbessern lässt, wobei diese Maßnahmen in besonders vorteilhaften Ausgestaltungen miteinander kombiniert werden.

Die erste Maßnahme besteht darin, den ausgebildeten Kunststoffmantel mit der hoch porösen Füllung zu nutzen, um den Luftdruck im Inneren zu reduzieren oder den Innenraum sogar spürbar zu evakuieren. Eine geringe Druckverringerung lässt sich beispielsweise schon dadurch erreichen, dass das Kernelement im Zuge einer Heißlaminierung komprimiert wird und sich anschließend wieder teilweise ausdehnt, so dass mit Abkühlung ein verringerter Innendruck erhalten wird. Alternativ lässt sich die Ummantelung beispielsweise auch direkt bei reduziertem Druck durchführen, um so einen möglichst niedrigen Druck im Innenraum zu gewährleisten. Welcher Druck gewählt werden sollte, hängt nach Einschätzung des Erfinders vor allem von dem angestrebten Einsatzzweck und den zu erwartenden Bedingungen ab. Insgesamt geht der Erfinder jedoch davon aus, dass die Ausgestaltungen mit relativ kleinem Unterdruck wirtschaftlich interessanter sein werden, wobei sich Unterdrücke von ca 60 kPa beispielsweise mit üblichen Tischvakuumier-Vorrichtungen erreichen lassen, wie sie teilweise aus dem Haushalt bekannt sind. Besonders bevorzugt ist demgemäß eine erfindungsgemäße Batterieanordnung, wobei das Trennelement bei 23 °C im Inneren des Kunststoffmantels einen Druck von weniger als 100 kPa, bevorzugt weniger als 75 kPa, besonders bevorzugt weniger als 50 kPa, ganz besonders bevorzugt weniger als 25 kPa, aufweist. Insbesondere für anspruchsvolle Anwendungen bevorzugt ist jedoch auch eine erfindungsgemäße Batterieanordnung, wobei das Trennelement bei 23 °C im Inneren des Kunststoffmantels einen Druck von weniger als 100 Pa, bevorzugt weniger als 10 Pa, besonders bevorzugt weniger als 1 Pa, ganz besonders bevorzugt weniger als 0,1 Pa, insbesondere bevorzugt weniger als 0,01 Pa, aufweist. Bevorzugt ist als besonders günstiger Kompromiss zwischen Isolationswirkung sowie Herstellungs- und Handhabungsaufwand eine erfindungsgemäße Batterieanordnung, wobei das Trennelement bei 23 °C im Inneren des Kunststoffmantels einen Druck im Bereich von 1 bis 95 kPa, bevorzugt im Bereich von 5 bis 90 kPa, besonders bevorzugt im Bereich von 10 bis 85 kPa, ganz besonders bevorzugt im Bereich von 20 bis 80 kPa, aufweist.

Die zweite vorteilhafte Maßnahme besteht darin, neben der ersten Kernschicht im Kernelement auch noch eine oder mehrere, besonders bevorzugt zumindest zwei, weitere Kernschichten vorzusehen. Hierdurch kann nicht nur die Gesamtisolationswirkung verbessert werden, sondern es können durch den Einsatz von flexiblem Materialien, beispielsweise textilen Flächengebilden oder strukturierten elastomeren Materialien insbesondere auch die Deformations- und Dämpfungseigenschaften optimiert werden, so dass die Trennelemente leichter reversibel und zerstörungsfrei deformierbar sind und zudem auch die prismatischen Zellen im Batterieverbund gegen mechanische Belastung schützen können. Bevorzugt ist somit eine erfindungsgemäße Batterieanordnung, wobei der Elementkern zumindest eine zweite Kernschicht, bevorzugt eine die erste Kernschicht kontaktierende zweite Kernschicht, umfasst, wobei die zweite Kernschicht ausgewählt ist aus der Gruppe bestehend aus elastomeren Flächenmaterialien, insbesondere makroskopisch strukturierten elastomeren Flächenmaterialien, Kunststoffschäumen, insbesondere Silikonschäumen, textilen Flächengebilden und textilen Abstandsgewirken, bevorzugt textilen Flächengebilden, insbesondere Filz- oder Vliesstoffen, und makroskopisch strukturierten Flächenmaterialien aus thermoplastischen Elastomeren, insbesondere silikonbasierten thermoplastischen Elastomeren.

Hinsichtlich der Dicke dieser zweiten Kernschichten ist eine erfindungsgemäße Batterieanordnung bevorzugt, wobei das textile Flächengebilde eine mittlere Dicke im Bereich von 0,2 bis 5,0 mm, bevorzugt im Bereich von 0,5 bis 3,0 mm, besonders bevorzugt im Bereich von 0,8 bis 2,0 mm, aufweist.

Bei der Auswahl des textilen Flächengebildes erachtet der Erfinder bestimmte Ausgestaltungen als besonders vorteilhaft. Bevorzugt ist zunächst eine erfindungsgemäße Batterieanordnung, wobei das textile Flächengebilde ein Vliesstoff, bevorzugt ein mechanisch verfestigter Vliesstoff, besonders bevorzugt ein durch Kombination von Reib- und Formschlussbindung verfestigter Vliesstoff, besonders bevorzugt ein Nadelvlies oder ein Spunlace-Vlies, besonders bevorzugt ein Nadelvlies, ist.

Bevorzugt ist zusätzlich oder alternativ eine erfindungsgemäße Batterieanordnung, wobei das textile Flächengebilde eine oder mehrere Materialfasern umfasst, die ausgewählt sind aus der Gruppe bestehend aus nichtbrennbaren Materialien. Besonders bevorzugt ist eine erfindungsgemäße Batterieanordnung, wobei das textile Flächengebilde eine oder mehrere Materialfasern umfasst, die ausgewählt sind aus der Gruppe bestehend aus Phenolharzfasern, Melaminharzfasern und Polyamidfasern, bevorzugt aus der Gruppe bestehend aus Phenolformaldehydharzfasern und Aramidfasern, besonders bevorzugt aus der Gruppe bestehend aus Phenolformaldehydharzfasern und para-Aramidfasern wobei die entsprechenden Fasern jeweils zu einem Massenanteil von 80 % oder mehr, bevorzugt 90 % oder mehr, besonders bevorzugt 95 % oder mehr, aus den jeweiligen Kunststoffen bestehen

Neben der ersten Kernschicht und einem insbesondere deformierbaren Material können zudem Folienmaterialien eingesetzt werden, welche insbesondere einen zusätzlichen Flammschutz liefern und gegen Strahlungswärme abschirmen. Bevorzugt ist in diesem Fall eine erfindungsgemäße Batterieanordnung, wobei der Elementkern zumindest eine dritte Kernschicht, bevorzugt eine die erste Kernschicht kontaktierende dritte Kernschicht, umfasst, wobei die dritte Kernschicht ausgewählt ist aus der Gruppe bestehend aus anorganischen Folien, bevorzugt Metallfolien und Mineralfolien, welche gegebenenfalls Bindemittel umfassen, bevorzugt Aluminiumfolie und Schichtsilikatfolien, insbesondere Tonerdesikalisilkatfolie.

Dem Erfinder ist es gelungen, besonders günstige Abmessungen zu identifizieren, mit denen sich Trennelemente erhalten lassen, welche den Zielkonflikt aus benötigtem Bauraum und Eigengewicht auf der einen und den isolations- und brandtechnischen Eigenschaften auf der anderen Seite besonders vorteilhaft lösen lassen. Bevorzugt ist nämlich eine erfindungsgemäße Batterieanordnung, wobei das flächige Trennelement auf einer der flächigen Seiten eine Fläche im Bereich von 100 bis 1000 cm², bevorzugt im Bereich von 120 bis 650 cm², aufweist. Bevorzugt ist zusätzlich oder alternativ eine erfindungsgemäße Batterieanordnung, wobei das flächige Trennelement eine mittlere Dicke im Bereich von im von 0,5 bis 8,0 mm, bevorzugt im Bereich von 1,0 bis 6,0 mm, aufweist. Bevorzugt ist zusätzlich oder alternativ auch eine erfindungsgemäße Batterieanordnung, wobei das flächige Trennelement eine mittleres Flächengewicht im Bereich von 50 bis 2400 g/m², bevorzugt im Bereich von 100 bis 1500 g/m², besonders bevorzugt im Bereich von 200 bis 1200 g/m², aufweist.

Der Fachmann versteht, dass die Ummantelung in der Praxis in der weit überwiegenden Zahl der Fälle eine relativ dünne Mantelschicht sein wird, und in vielen Fällen insbesondere auch im Vergleich zum Elementkern zumeist relativ dünn sein wird. Besonders praxisrelevant ist somit insbesondere eine erfindungsgemäße Batterieanordnung, wobei das Kernelement im flächigen Trennelement einen Volumenanteil von 50 % oder mehr, bevorzugt 60 % oder mehr, besonders bevorzugt 70 % oder mehr, ganz besonders bevorzugt von 80 % oder mehr, aufweist, bezogen auf das Volumen des flächigen Trennelements, und/oder wobei der Kunststoffmantel im flächigen Trennelement einen Volumenanteil von 50 % oder weniger, bevorzugt 40 % oder weniger, besonders bevorzugt 30 % oder weniger, ganz besonders bevorzugt von 20 % oder weniger, aufweist, bezogen auf das Volumen des flächigen Trennelements.

Der Fachmann versteht, dass sich das Kernelement und insbesondere die erste Kernschicht sich in der Praxis in der weit überwiegenden Zahl der Fälle sehr weitgehend durch das flächige Kernelement erstrecken wird, um über einen Großteil der Fläche die gewünschte Isolationswirkung leisten zu können. Besonders praxisrelevant ist somit insbesondere eine erfindungsgemäße Batterieanordnung, wobei die flächige erste Kernschicht auf einer der flächigen Seiten eine Fläche aufweist, welche 80 % oder mehr, bevorzugt 90 % oder mehr, besonders bevorzugt 95 % oder mehr, der entsprechenden flächigen Seite des gesamten flächigen Trennelements entspricht.

Offenbart wird in diesem Zusammenhang auch die Verwendung eines flächigen Trennelements, umfassend:
i) einen Elementkern, umfassend eine erste Kernschicht, wobei die erste Kernschicht zu einem Massenanteil von 70 % oder mehr aus porösem, amorphen Siliciumdioxid besteht, bezogen auf die Masse der Kernschicht,
ii) einen den Elementkern ummantelnden Kunststoffmantel, umfassend ein Kunststoffmaterial,
zur thermischen Isolierung von zwei oder mehr Batterieeinheiten in einer Batterieanordnung.

Die Erfindung betrifft in Übereinstimmung mit der fachmännischen Erwartung auch ein Fahrzeug, umfassend eine erfindungsgemäße Batterieanordnung.

Die Erfindung betrifft auch ein vorteilhaftes Verfahren zur Herstellung einer Batterieanordnung nach Anspruch 1, umfassend die Verfahrensschritte:
a) Herstellen oder Bereitstellen des Elementkerns, umfassend die erste Kernschicht, und
b) Ummanteln des Elementkerns mit einem Kunststoffmaterial zum Erhalt des Kunststoffmantels.

Das entsprechend hergestellte Trennelement kann anschließend zwischen den Batterieeinheiten einer Batterieanordnung angeordnet werden.

Besonders bevorzugt ist es hierbei, den Elementkern bzw. dessen erste Kernschicht durch Verpressen des Siliciumdioxids herzustellen, wobei übliche Presswerkzeuge zum Einsatz kommen können, soweit diese einen für die Verpressung jeweils ausreichenden Pressdruck aufbauen können. Geeignete Presswerkzeuge sind dabei von verschiedenen Anbietern kommerzielle erhältlich. Besonders bevorzugt ist entsprechend ein erfindungsgemäßes Verfahren, wobei das Herstellen des Elementkerns in Verfahrensschritt a) das Verpressen eines partikulären, porösen, amorphen Siliciumdioxids umfasst, bevorzugt unter Einsatz eines oder mehrerer Bindemittel.

Die erste Kernschicht kann beispielsweise unmittelbar in der Form gepresst werden, in der sie in der späteren Trennschicht eingesetzt werden soll. Alternativ und für viele Fälle prozesstechnisch bevorzugt kann jedoch auch zuvor ein größerer Block hergestellt werden, insbesondere durch ein wie vorstehend beschriebenes Verpressen, aus welchem dann die Kernschichten mit der gewünschten Dicke vereinzelt werden. Entsprechende Ausgangsblöcke können beispielsweise unter Hochdruck verpresste Platten mit einer Fläche von 140 bis 12000 cm² sein, aus denen anschließend beispielweise bis zu 100 einzelne Kernschichten hergestellt werden können. Besonders bevorzugt ist somit zusätzlich oder alternativ zu einer Herstellung mittels Verpressen ein erfindungsgemäßes Verfahren, wobei das Herstellen des Elementkerns in Verfahrensschritt a) das Abtrennen der ersten Kernschicht von einem Ausgangsblock umfasst, bevorzugt mittels einer Säge- oder Schneideinheit.

Bevorzugt wird das erfindungsgemäße Verfahren benutzt, um bevorzugt einzusetzende Trennelemente für bevorzugte Batterieanordnungen herzustellen. Neben der Anordnung von weiteren Kernschichten auf der ersten Kernschicht vor dem Ummanteln des Elementkerns mit einem Kunststoffmaterial, ist es dabei besonders bevorzugt, die Ummantelung so auszuführen, dass im Mantelinneren ein Unterdruck herrscht.

Bevorzugt ist somit zunächst ein erfindungsgemäßes Verfahren, wobei das Herstellen des Elementkerns in Verfahrensschritt a) das Anordnen der ersten Kernschicht relativ zu einer zweiten Kernschicht umfasst, wobei die zweite Kernschicht ausgewählt ist aus der Gruppe bestehend aus elastomeren Flächenmaterialien, insbesondere makroskopisch strukturierten elastomeren Flächenmaterialien, Kunststoffschäumen, insbesondere Silikonschäumen, und textilen Flächengebilden, bevorzugt textilen Flächengebilden, insbesondere Filz- oder Vliesstoffen, und makroskopisch strukturierten Flächenmaterialien aus thermoplastischen Elastomeren, insbesondere silikonbasierten thermoplastischen Elastomeren. Bevorzugt ist insoweit zusätzlich oder alternativ ein erfindungsgemäßes Verfahren, wobei das Herstellen des Elementkerns in Verfahrensschritt a) das Anordnen der ersten Kernschicht relativ zu einer dritten Kernschicht umfasst, wobei die dritte Kernschicht ausgewählt ist aus der Gruppe bestehend aus anorganischen Folien, bevorzugt Metallfolien und Mineralfolien, welche gegebenenfalls Bindemittel umfassen, bevorzugt Aluminiumfolie und Schichtsilikatfolien, insbesondere Tonerdesikalisilkatfolie.

Bevorzugt ist zusätzlich oder alternativ ein erfindungsgemäßes Verfahren, wobei das Ummanteln des Elementkerns mit dem Kunststoffmaterial bei einem Druck von weniger als 100 kPa, bevorzugt weniger als 75 kPa, besonders bevorzugt weniger als 50 kPa, ganz besonders bevorzugt weniger als 25 kPa, erfolgt.

Bevorzugt ist zusätzlich oder alternativ ein erfindungsgemäßes Verfahren, wobei das Ummanteln des Elementkerns mit dem Kunststoffmaterial bei einem Druck von weniger als 100 Pa, bevorzugt weniger als 10 Pa, besonders bevorzugt weniger als 1 Pa, ganz besonders bevorzugt weniger als 0,1 Pa, insbesondere bevorzugt weniger als 0,01 Pa, erfolgt. Besonders bevorzugt ist dabei ein erfindungsgemäßes Verfahren, wobei das Ummanteln des Elementkerns mit dem Kunststoffmaterial in einer Laminiervorrichtung oder einer Folienversiegelungsvorrichtung erfolgt, bevorzugt in einem Vakuumlaminierer.

Nachfolgend werden die Erfindung und bevorzugte Ausführungsformen der Erfindung unter Bezugnahme auf die beiliegenden Figuren näher erläutert und beschrieben. In den Figuren zeigen dabei:
- Fig. 1: eine schematische Querschnittsdarstellung einer bevorzugten erfindungsgemäßen Batterieanordnung;
- Fig. 2: eine schematische Querschnittsdarstellung eines ersten besonders bevorzugten flächigen Trennelements für den Einsatz in bevorzugten erfindungsgemäßen Batterieanordnungen;
- Fig. 3: eine schematische Querschnittsdarstellung eines zweiten besonders bevorzugten flächigen Trennelements für den Einsatz in bevorzugten erfindungsgemäßen Batterieanordnungen; und
- Fig. 4: eine schematische Querschnittsdarstellung eines dritten besonders bevorzugten flächigen Trennelements für den Einsatz in bevorzugten erfindungsgemäßen Batterieanordnungen.

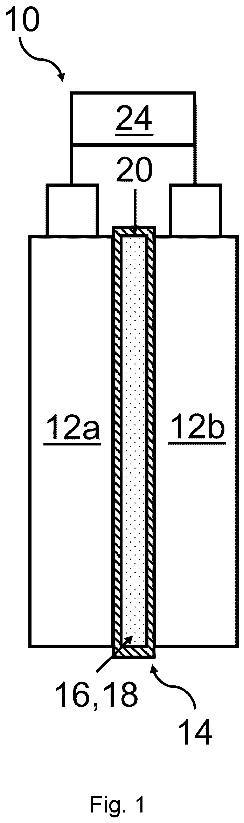

Fig. 1 zeigt eine vereinfachte schematische Querschnittsdarstellung einer bevorzugten erfindungsgemäßen Batterieanordnung 10. In dem gezeigten Beispiel sind zwei Batterieeinheiten 12a, 12b elektrisch miteinander verbunden, wobei das Batteriemanagement über eine Batteriekontrolleinheit 24 erfolgt, die in Fig. 1 schematisch gezeigt ist.

Im gezeigten Beispiel handelt es sich bei den Batterieeinheiten 12a, 12b um Lithium-Ionen-Batteriezellen, die als prismatische Zellen ausgeführt sind.

Zwischen den Batterieeinheiten 12a, 12b ist ein flächiges Trennelement 14 angeordnet, durch welches die zwei Batterieeinheiten 12a, 12b so vollständig voneinander separiert werden, dass kein unmittelbarer Kontakt zwischen den Batterieeinheiten 12a, 12b besteht.

Die Fig. 1 zeigt dabei beispielhaft einen Ausschnitt, der Teil einer größeren Batterieanordnung 10 sein kann, welche beispielsweise weitere durch flächige Trennelemente 14 separierte Batterieeinheiten 12a, 12b umfassen kann, die gemeinsam in einem Batteriegehäuse angeordnet sind.

Im gezeigten Beispiel der Fig. 1 besteht das flächige Trennelement 14 aus einem Elementkern 16 und einer den Elementkern 16 vollständig umgebenden Kunststoffmantel 20, wobei sich der Elementkern 16 etwa 80 % des Volumens des flächigen Trennelements 14 einnimmt und sich über etwa 95 % der Fläche des flächigen Trennelements 14 erstreckt.

In der Ausführungsform der Fig. 1 besteht der Elementkern 16 aus der ersten Kernschicht 18, welche zu einem Massenanteil von mehr als 98 % aus pyrogenem amorphen Siliciumdioxid besteht. Die erste Kernschicht 18 wurde zuvor zusammen mit anderen flächigen Kernschichten durch Vereinzelung mit einer Schneidvorrichtung aus einem größeren Ausgangsblock der gleichen Grundzusammensetzung erhalten. Dieser Ausgangsblock wurde zuvor in einer Hochdruckpresse aus dem pulverförmigen partikulären Ausgangsmaterial ohne Einsatz von Bindemittel durch Verpressen hergestellt. Die erste Kernschicht 18 hat im gezeigten Bespiel eine mittlere Dichte von etwa 350 kg/m³.

Der in Fig. 1 gezeigte Kunststoffmantel 20 besteht aus einem thermoplastischen Kunststoff, beispielsweise Polyethylenterephthalat (PET). Die Ummantelung erfolgte dabei mit einer Laminiervorrichtung, wobei der Elementkern 16 bzw. die erste Kernschicht 18 zwischen PET-Folien einlaminiert wird, so dass der Elementkern 16 im Wesentlichen formschlüssig umgeben wird. Das Laminieren erfolgte mit einem handelsüblichen Vakuum-Laminierer, wobei im Inneren des Kunststoffmantels 20 ein Druck von etwa 60 kPa eingestellt wurde.

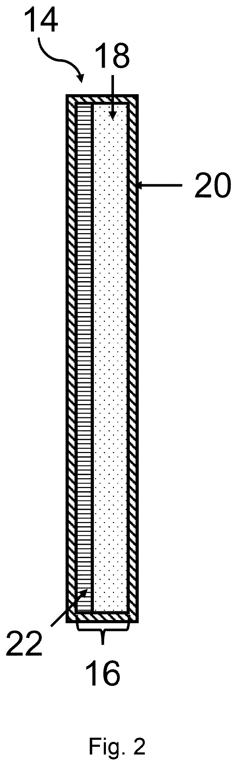

Fig 2. zeigt eine vereinfachte schematische Querschnittsdarstellung durch ein alternatives, besonders bevorzugtes flächiges Trennelement 14, welches in der Batterieanordnung 10 der Fig. 1 eingesetzt werden kann.

Das flächige Trennelement 14 der Fig. 2 wurde prinzipiell wie vorstehend beschrieben hergestellt, wobei jedoch vor dem Laminieren eine zweite Kernschicht 22 auf der ersten Kernschicht angeordnet wird. Die zweite Kernschicht 22 ist im gezeigten Beispiel der Fig. 2 dabei als makroskopisch strukturiertes Flächenmaterialien aus einem silikonbasierten thermoplastischen Elastomer ausgeführt, welches durch seine Struktur und seine Materialeigenschaften eine erhöhte Deformierbarkeit bewirkt und die absoluten Isolationseigenschaften durch das flächige Trennelement 14 hindurch verbessert. Zusätzlich zu der zweiten Kernschicht 22 die erste Kernschicht auf der gegenüberliegenden Seite mit einer dünnen Schichtsilikatfolie bedeckt (nicht gezeigt).

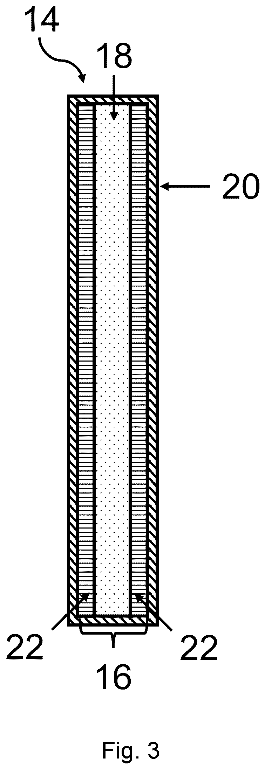

Fig. 3 zeigt ausgehend von dem bevorzugten Aufbau der Fig. 2 ein besonders bevorzugtes flächiges Trennelement 14, welches besonders bevorzugt auch für Pouch-Zellen eingesetzt werden kann. In dem flächigen Trennelement 14 der Fig. 3 umfasst der Elementkern zwei zweite Kernschichten 22, welche die erste Kernschicht 18 beidseitig flankieren.

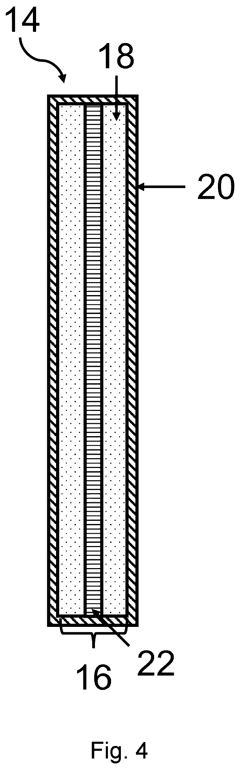

Fig. 4 zeigt als Variation der in Fig. 3 dargestellten Ausführungsform einen alternativen Aufbau der Fig. 2, nämlich ein alternatives besonders bevorzugtes flächiges Trennelement 14. In dem flächigen Trennelement 14 der Fig. 4 umfasst der Elementkern zwei erste Kernschichten 18, welche die zweite Kernschicht 22 beidseitig flankieren.

### Bezugszeichen

- 10: Batterieanordnung
- 12a-b: Batterieeinheiten
- 14: flächiges Trennelement
- 16: Elementkern
- 18: erste Kernschicht
- 20: Kunststoffmantel
- 22: zweite Kernschicht
- 24: Batteriekontrolleinheit

## Patentansprüche

1. Batterieanordnung (10), insbesondere für den Einsatz in Elektrofahrzeugen, umfassend zwei oder mehr Batterieeinheiten (12a, 12b),
wobei wenigstens zwischen zwei benachbarten Batterieeinheiten (12a, 12b) ein flächiges Trennelement (14) angeordnet ist, welches die Batterieeinheiten (12a, 12b) zumindest abschnittsweise voneinander separiert, wobei das flächige Trennelement (14) umfasst:
i) einen Elementkern (16), umfassend eine erste Kernschicht (18), wobei die erste Kernschicht (18) zu einem Massenanteil von 70 % oder mehr aus porösem, amorphen Siliciumdioxid besteht, bezogen auf die Masse der Kernschicht (18),
ii) einen den Elementkern (16) ummantelnden Kunststoffmantel (20), umfassend ein Kunststoffmaterial.

2. Batterieanordnung (10) nach Anspruch 1, wobei die Batterieeinheiten (12a, 12b) prismatische Zellen sind oder prismatische Zellen umfassen.

3. Batterieanordnung (10) nach einem der Ansprüche 1 oder 2, wobei das poröse, amorphe Siliciumdioxid ausgewählt ist aus der Gruppe bestehend aus gefälltem Siliciumdioxid, pyrogenem Siliciumdioxid und Silicat-Nanogel.

4. Batterieanordnung (10) nach einem der Ansprüche 1 bis 3, wobei die erste Kernschicht (18) zu einem Massenanteil von 80 % oder mehr, aus porösem, amorphen Siliciumdioxid besteht.

5. Batterieanordnung (10) nach einem der Ansprüche 1 bis 4, wobei das Kunststoffmaterial einen oder mehrere thermoplastische Kunststoffe umfasst.

6. Batterieanordnung (10) nach einem der Ansprüche 1 bis 5, wobei der Kunststoffmantel (20) einen Innenraum ausbildet, wobei der Elementkern (16) im Innenraum angeordnet ist.

7. Batterieanordnung (10) nach einem der Ansprüche 1 bis 6, wobei das Trennelement bei 23 °C im Inneren des Kunststoffmantels (20) einen Druck von weniger als 100 kPa aufweist.

8. Batterieanordnung (10) nach einem der Ansprüche 1 bis 7, wobei der Elementkern (16) zumindest eine zweite Kernschicht (22) umfasst, wobei die zweite Kernschicht (22) ausgewählt ist aus der Gruppe bestehend aus elastomeren Flächenmaterialien, Kunststoffschäumen, textilen Flächengebilden und Abstandstextilien.

9. Fahrzeug, umfassend einen Elektromotor und zumindest eine Batterieanordnung (10) nach einem der Ansprüche 1 bis 8.

10. Verfahren zur Herstellung einer Batterieanordnung (10) nach einem der Ansprüche 1 bis 8, umfassend die Verfahrensschritte:
a) Herstellen oder Bereitstellen des Elementkerns (16), umfassend die erste Kernschicht (18), und
b) Ummanteln des Elementkerns (16) mit einem Kunststoffmaterial zum Erhalt des Kunststoffmantels (20).

11. Verfahren nach Anspruch 10, wobei das Herstellen des Elementkerns (16) in Verfahrensschritt a) das Verpressen eines partikulären, porösen, amorphen Siliciumdioxids umfasst.

12. Verfahren nach einem der Ansprüche 10 oder 11, wobei das Herstellen des Elementkerns (16) in Verfahrensschritt a) das Abtrennen der ersten Kernschicht (18) von einem Ausgangsblock umfasst.

13. Verfahren nach einem der Ansprüche 10 bis 12, wobei das Herstellen des Elementkerns (16) in Verfahrensschritt a) das Anordnen der ersten Kernschicht (18) relativ zu einer zweiten Kernschicht (22) umfasst, wobei die zweite Kernschicht (22) ausgewählt ist aus der Gruppe bestehend aus elastomeren Flächenmaterialien, Kunststoffschäumen und textilen Flächengebilden.

14. Verfahren nach einem der Ansprüche 10 bis 13, wobei das Ummanteln des Elementkerns (16) mit dem Kunststoffmaterial in einer Laminiervorrichtung oder einer Folienversiegelungsvorrichtung erfolgt.

15. Verfahren nach einem der Ansprüche 10 bis 14, wobei das Ummanteln des Elementkerns mit dem Kunststoffmaterial bei einem Druck von weniger als 100 kPa erfolgt.

## Claims

1. Battery assembly (10), in particular for use in electric vehicles, comprising two or more battery units (12a, 12b),
wherein a planar separating element (14) is arranged at least between two adjacent battery units (12a, 12b), which at least partially separates the battery units (12a, 12b) from one another, wherein the planar separating element (14) comprises:
i) an element core (16), comprising a first core layer (18), wherein the first core layer (18) consists to an amount of 70% by mass or more of porous, amorphous silicon dioxide, based on the mass of the core layer (18),
ii) a plastic sheath (20) enclosing the element core (16), comprising a plastic material.

2. Battery arrangement (10) according to claim 1, wherein the battery units (12a, 12b) are prismatic cells or comprise prismatic cells.

3. Battery arrangement (10) according to any one of claims 1 or 2, wherein the porous, amorphous silicon dioxide is selected from the group consisting of precipitated silicon dioxide, fumed silicon dioxide, and silicate nanogel.

4. Battery arrangement (10) according to any one of claims 1 to 3, wherein the first core layer (18) consists to an amount of 80% by mass or more of porous, amorphous silicon dioxide.

5. Battery arrangement (10) according to any one of claims 1 to 4, wherein the plastic material comprises one or more thermoplastics.

6. Battery arrangement (10) according to any one of claims 1 to 5, wherein the plastic sheath (20) defines an interior space, wherein the element core (16) is arranged in the interior space.

7. Battery arrangement (10) according to any one of claims 1 to 6, wherein the separating element, at 23 °C, has a pressure of less than 100 kPa inside the plastic sheath (20).

8. Battery arrangement (10) according to any one of claims 1 to 7, wherein the element core (16) comprises at least one second core layer (22), wherein the second core layer (22) is selected from the group consisting of elastomeric sheet materials, plastic foams, textile sheet structures, and spacer textiles.

9. Vehicle, comprising an electric motor and at least one battery arrangement (10) according to any one of claims 1 to 8.

10. Method for producing a battery arrangement (10) according to any one of claims 1 to 8, comprising the steps:
a) producing or providing the element core (16), comprising the first core layer (18), and
b) encasing the element core (16) with a plastic material to obtain the plastic sheat (20).

11. Method according to claim 10, wherein producing the element core (16) in step a) comprises compressing a particulate, porous, amorphous silicon dioxide.

12. Method according to any one of claims 10 or 11, wherein producing the element core (16) in method step a) comprises separating the first core layer (18) from an initial block.

13. Method according to any one of claims 10 to 12, wherein producing the element core (16) in step a) comprises arranging the first core layer (18) relative to a second core layer (22), wherein the second core layer (22) is selected from the group consisting of elastomeric sheet materials, plastic foams, and textile sheet structures.

14. Method according to any one of claims 10 to 13, wherein encasing the element core (16) with the plastic material is carried out in a laminating apparatus or a film sealing apparatus.

15. Method according to any one of claims 10 to 14, wherein encasing the element core with the plastic material is carried out at a pressure of less than 100 kPa.

## Revendications

1. Système de batteries (10), notamment pour une utilisation dans des véhicules électriques, comprenant au moins deux unités de batterie (12a, 12b),
dans lequel un élément de séparation en feuille (14) est agencé au moins entre deux unités de batterie adjacentes (12a, 12b), lequel sépare les unités de batterie (12a, 12b) les unes des autres, au moins par sections, l'élément de séparation en feuille (14) comprenant :
i) un noyau d'élément (16) comprenant une première couche de noyau (18), ladite première couche de noyau (18) étant constituée de dioxyde de silicium amorphe poreux à hauteur de 70 % ou plus en pourcentage massique, par rapport à la masse de la couche de noyau (18),
ii) une gaine en matière plastique (20) enveloppant le noyau d'élément (16), comprenant un matériau plastique.

2. Système de batteries (10) selon la revendication 1, dans lequel les unités de batterie (12a, 12b) sont des cellules prismatiques ou comprennent des cellules prismatiques.

3. Système de batteries (10) selon l'une quelconque des revendications 1 ou 2, dans lequel le dioxyde de silicium amorphe poreux est sélectionné parmi le groupe composé du dioxyde de silicium précipité, du dioxyde de silicium pyrogène et du nanogel de silicate.

4. Système de batteries (10) selon l'une quelconque des revendications 1 à 3, dans lequel la première couche de noyau (18) est constituée, à 80 % ou plus en pourcentage massique, de dioxyde de silicium amorphe poreux.

5. Système de batteries (10) selon l'une quelconque des revendications 1 à 4, dans lequel le matériau plastique comprend une ou plusieurs matières thermoplastiques.

6. Système de batteries (10) selon l'une quelconque des revendications 1 à 5, dans lequel la gaine en matière plastique (20) forme un espace intérieur, le noyau d'élément (16) étant agencé dans ledit espace intérieur.

7. Système de batteries (10) selon l'une quelconque des revendications 1 à 6, dans lequel l'élément de séparation présente, à une température de 23 °C à l'intérieur de la gaine en matière plastique (20), une pression inférieure à 100 kPa.

8. Système de batteries (10) selon l'une quelconque des revendications 1 à 7, dans lequel le noyau d'élément (16) comprend au moins une deuxième couche de noyau (22), ladite deuxième couche de noyau (22) étant sélectionnée parmi le groupe composé de matériaux élastomères en feuille, de mousses plastiques, de structures textiles en feuille et de textiles d'espacement.

9. Véhicule, comprenant un moteur électrique et au moins un système de batteries (10) selon l'une quelconque des revendications 1 à 8.

10. Procédé de fabrication d'un système de batteries (10) selon l'une quelconque des revendications 1 à 8, comprenant les étapes de procédé :
a) Fabrication ou mise à disposition du noyau d'élément (16), comprenant la première couche de noyau (18), et
b) Enveloppement du noyau d'élément (16) par un matériau plastique pour obtenir la gaine en matière plastique (20).

11. Procédé selon la revendication 10, dans lequel la fabrication du noyau d'élément (16) comprend, à l'étape de procédé a), le pressage d'un dioxyde de silicium particulaire amorphe poreux.

12. Procédé selon l'une quelconque des revendications 10 ou 11, dans lequel la fabrication du noyau d'élément (16) comprend, à l'étape de procédé a), la séparation de la première couche de noyau (18) d'un bloc de départ.

13. Procédé selon l'une quelconque des revendications 10 à 12, dans lequel la fabrication du noyau d'élément (16) comprend, à l'étape de procédé a), l'agencement de la première couche de noyau (18) par rapport à une deuxième couche de noyau (22), ladite deuxième couche de noyau (22) étant sélectionnée parmi le groupe composé de matériaux élastomères en feuille, de mousses plastiques et de structures textiles en feuille.

14. Procédé selon l'une quelconque des revendications 10 à 13, dans lequel l'enrobage du noyau d'élément (16) avec le matériau plastique s'effectue dans un dispositif de laminage ou dans un dispositif de thermoscellage.

15. Procédé selon l'une quelconque des revendications 10 à 14, dans lequel l'enrobage du noyau d'élément avec le matériau plastique s'effectue à une pression inférieure à 100 kPa.
